(19) Europäisches Patentamt
European Patent Office
Office européen des brevets

(11) Veröffentlichungsnummer: **0 033 077**
**B1**

# (12) EUROPÄISCHE PATENTSCHRIFT

(45) Veröffentlichungstag der Patentschrift: **18.05.83**

(51) Int. Cl.³: **C 08 L 71/04** // (C08L71/04, 25/04, 85/02)

(21) Anmeldenummer: **81100162.7**

(22) Anmeldetag: **12.01.81**

(54) **Flammhemmende Zusammensetzung aus Polyphenylenether, Polystyrolharz und Polyphosphonat.**

(30) Priorität: **26.01.80 DE 3002792**

(43) Veröffentlichungstag der Anmeldung: **05.08.81 Patentblatt 81/31**

(45) Bekanntmachung des Hinweises auf die Patenterteilung: **18.05.83 Patentblatt 83/20**

(84) Benannte Vertragsstaaten: **DE FR GB IT NL**

(56) Entgegenhaltungen:
**DE-A-2 909 442**
**DE-B-2 454 124**

(73) Patentinhaber: **BAYER AG, Zentralbereich Patente, Marken und Lizenzen, D-5090 Leverkusen 1, Bayerwerk (DE)**

(72) Erfinder: **Schmidt, Manfred, Dr., c/o Mobay Chemical Corp, New Martinsville VA 26 155 (US)**
Erfinder: **Reinking, Klaus, Dr., Robert-Stolz-Strasse 16 B, D-5632 Wermelskirchen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 033 077 B1

# Flammhemmende Zusammensetzung aus Polyphenylenether, Polystyrolharz und Polyphosphonat

Gegenstand der Erfindung ist eine flammhemmende thermoplastische Zusmmensetzung, die ein Polyphenylenetherharz, ein Polystyrolharz und ein aromatisches Polyphosphonat sowie gegebenenfalls geringe Mengen einer weichmachenden Verbindung, wie beispielsweise ein monomeres Triarylphosphat, ein cyclisches Phosphonat oder einen halogenierten Kohlenwasserstoff, enthält.

Zusammensetzungen aus einem Polyphenylenetherharz und einem Polystyrolharz sind allgemein als technische Thermoplaste bekannt, die nach dem Extrusions- und Spritzgiessverfahren zu Formkörpern verarbeitet werden können. Ihre Herstellung und Verwendung wird beispielsweise in dem US-Patent 3 383 435 beschrieben.

Solche Zusammensetzungen sind normalerweise entflammbar, insbesondere wenn sie hohe Anteile eines Polystyrolharzes enthalten. Die Flammwidrigkeit solcher Polymerlegierungen wird beispielsweise durch Zugabe von Triarylphosphaten (vgl. US-Patentschrift 3 639 506, DE-A 2 751 496) oder cyclischen Phosphonaten (vgl. DE-A 2 836 771) verbessert, wodurch sich jedoch die physikalischen Eigenschaften, wie insbesondere die Wärmeformbeständigkeit dieser Polymerlegierungen drastisch verschlechtern.

Es wurde nunmehr gefunden, dass bei Zugabe eines hochmolekularen thermoplastischen Polyphosphonats zu einer Zusammensetzung aus Polyphenylenetherharz und Polystyrolharz eine flammwidrige Polymerlegierung resultiert, deren Wärmeformbeständigkeit wesentlich höher ist, als die einer Polyphenylenether-Polystyrolharz-Legierung, die beispielsweise anstelle des Polyphosphonats eine gleiche Gewichtsmenge eines Triarylphosphats enthält.

Der Anmelder hat sich unter Bezugnahme auf DE-A 2 909 442, FR-Al 2 451 386 und 6B-A 2 043 083 freiwillig eingeschränkt und gesonderte Patentansprüche für DE, FR und GB vorgelegt.

Gemäss der vorliegenden Erfindung werden somit flammhemmende Zusammensetzungen beansprucht, die

(1) eine normalerweise brennbare Zusammensetzung aus einem Polyphenylenetherharz und einem Polystyrolharz,

(2) einen gegebenenfalls verzweigten aromatischen thermoplastischen Polyphosphonsäureester mit einem Zahlenmittelmolekulargewicht (Zahlenmittel $\bar{M}_n$) von 4000 bis 80.000 sowie gegebenenfalls

(3) geringe Mengen einer weichmachenden Verbindung enthalten.

Erfindungsgemäss sind Homo- oder Copolyphosphonate geeignet.

Die erfindungsgemäss geeigneten Polyphosphonate bestehen aus wiederkehrenden Einheiten der Strukturen

A) 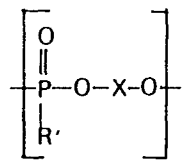 und gegebenenfalls

B) 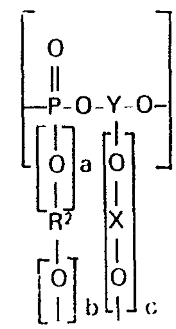

C) den in den Strukturen A) und B) an Phosphor gebundenen Endgliedern

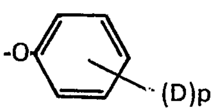 ; -OH; -O-X-OH und an den

Sauerstoff gebundenen Endgliedern

-H, 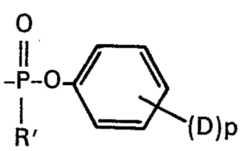 und

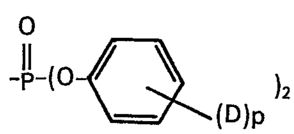

Die Symbole X, D, p und R′ sind nachstehend erläutert, wobei der Anteil B), bezogen auf Summe aus A) und B), 0 bis 3 Mol % betragen kann und wobei in den Strukturen A) und B) bedeuten:

R′ mindestens einen der Reste:
$C_1$–$C_{12}$-Alkyl,
$C_2$–$C_{12}$-Alkenyl,
$C_6$–$C_{30}$-Cycloalkyl, Cycloalkenyl, -Aryl, Arylalkyl oder
-Arylalkenyl, wobei die jeweilige Arylgruppe nicht substituiert oder durch 1-5 $C_1$–$C_4$-Alkylgruppen substituiert ist,

X mindestens einen der Reste:

Phenylen 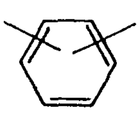

Biphenylen 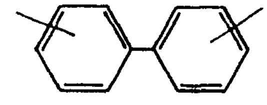

$C_1$–$C_4$-Alkylenbisphenylen

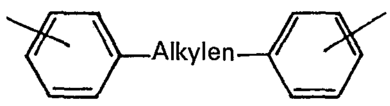

$C_5$–$C_{12}$-Cycloalkylenbisphenylen

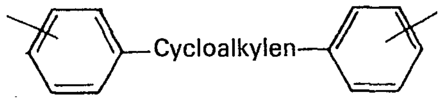

Thiobisphenylen

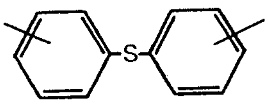

Oxibisphenylen

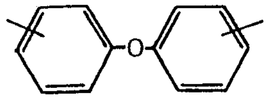

Sulfonylbisphenylen

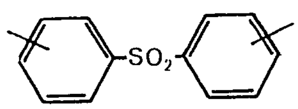

Carbonylbisphenylen

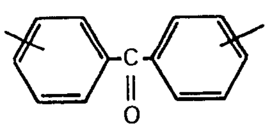

Naphthylen

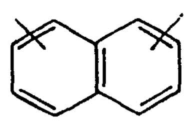

wobei jeder Phenylkern unsubstituiert oder durch 1-4 $C_1$–$C_4$-Alkylgruppen und der Naphthylenkern unsubstituiert oder durch 1-6 mindestens einer der genannten Alkylgruppen substituiert ist;

Y einen drei- oder vierwertigen Rest eines um die phenolischen Hydroxylgruppen verminderten trifunktionellen Einkern- oder tri- oder tetrafunktionellen Mehrkernphenols, wobei im Falle des Mehrkernphenols die ein oder zwei phenolische Hydroxigruppen tragenden aromatischen Kerne durch aliphatische $C_1$–$C_7$-Kohlenwasserstoffreste oder durch mindestens einen Benzolrest verbunden sind;

Y X, wenn c=o, a=1, b=1 und gleichzeitig $R^2 = Y'–(O–X–O)_c$, bzw. $R^2 = X$ ist, wobei Y' = Y und C' und 1 oder 2 sind

a 0 oder die Zahl 1;

b 0 oder die Zahl 1;

c 0 oder eine der Zahlen 1 oder 2, vorzugsweise c = 1 oder 2;

$R^2$ R', wenn a und b jeweils 0 sind, in diesem Fall muss Y einen drei- oder vierwertigen Rest, wie oben definiert, darstellen;

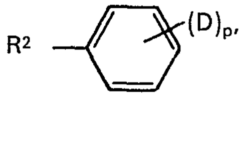

wenn a = 1 und b = 0 sind, in diesem Fall muss Y einen drei- oder vierwertigen Rest, wie oben definiert, darstellen;

$R^2$ X oder $Y'–(O–X–O–)_{c'}$, wenn a und b jeweils 1 sind;

D gleich oder verschieden und eine $C_1$–$C_4$-Alkylgruppe und p = 0 oder eine Zahl von 1 bis 5, vorzugsweise p = 0, darstellt.

Vorzugsweise haben vorstehende Definitionen folgende Bedeutung:

R' mindestens einen der Reste Methyl oder Phenyl, insbesondere Methyl;

X mindestens einen der Reste Phenylen, Biphenylen $C_1$–$C_4$-Alkylenbisphenylen, wobei jeder Phenylenkern durch 1 bis 4 Methylgruppen substituiert sein kann, Cyclohexylenbisphenylen, Oxibisphenylen, Thiobisphenylen, Sulfonylbisphenylen, insbesondere $C_1$–$C_4$-Alkylenbisphenylen, wobei jeder Phenylkern durch ein oder zwei Methylgruppen substituiert sein kann;

Y einen drei- oder vierwertigen Rest eines um die phenolischen Hydroxylgruppen verminderten trifunktionellen Einkern- oder tri- oder tetrafunktionellen Mehrkernphenols, wobei im Falle des Mehrkernphenols die ein oder zwei phenolische Hydroxylgruppen tragenden aromatischen Kerne durch aliphatische $C_1$–$C_7$-Kohlenwasserstoffreste oder durch mindestens einen Benzolrest verbunden sein können;

a 0 oder die Zahl 1;

b 0 oder die Zahl 1;

c eine der Zahlen 1 oder 2;

$R^2$ R', wenn a und b jeweils 0 sind;

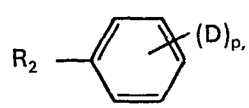

wenn a = 1 und b = 0 sind;

$R_2$ X oder $Y'–(0–X–0–)_{c'}$, wenn a und b jeweils 1 sind;

D gleich oder verschieden und eine $C_1$–$C_4$-Alkylgruppe und p = 0 oder eine Zahl von 1 bis 5, insbesondere p = 0.

Erfindungsgemäss geeignete und insbesonders bevorzugte Polyphosphonsäureester sind Polymethylphosphonsäureester des Bisphenol A, des 4,4'-Dihydroxidiphenyls und des Hydrochinons.

Vorzugsweise besitzen die thermoplastischen aromatischen Polyphosphonate mittlere Molekulargewichte (Zahlenmittel $\bar{M}_n$) von 6000 bis 80 000, insbesondere 6000 bis 40 000. Die Bestimmung der Molekulargewichte erfolgt nach der Methode der Membranosmose mit Hilfe von Membranen, die für Teilchen mit einem Molekulargewicht bis zu 3000 durchlässig sind.

Die Herstellung der erfindungsgemäss geeigneten aromatischen Polyphosphonate ist im Prinzip bekannt; sie kann vorzugsweise nach dem Verfahren der Schmelzumesterung in Gegenwart neutraler Umesterungskatalysatoren wie Titantetraalkylaten, Dialkylzinnoxiden, Zirkontetraalkylaten, Vanadyl-alkylaten, Dialkyl-dialkoxizinnverbindungen oder Mischungen aus Germaniumdioxid oder Titandioxid mit einem der vorgenannten

Katalysatoren erfolgen, wobei Phosphonsäurediarylester gegebenenfalls in Gegenwart von bis zu 3 Mol % verzweigender Triarylphosphate mit aromatischen Diolen gegebenenfalls in Gegenwart von bis 3 Mol % verzweigender aromatischer Tri- oder Tetrahydroxiverbindungen unter Abspaltung der Monohydroxiaryle bei erhöhter Temperatur und im Vakuum umgesetzt werden.

Die Herstellung der erfindungsgemäss verwendbaren Polyphosphonate ist folgende 105,1 Mol des Phosphonsäurediarylesters werden unter Stickstoff mit 99,1 Mol des aromatischen Diols und 0,1 Mol einer 4-wertig phenolisch-OHfunktionellen Verbindung in Gegenwart von 2,27 $\cdot 10^{-3}$ Gew.-% (bezogen auf 100 Gew.-% des aromatischen Diols) Katalysator bei 250°C intensiv vermischt. Innerhalb von 3 Stunden wird unter einem von 250 auf 100 mbar absinkendem Vakuum und bei einer von 250°C auf 265°C ansteigenden Temperatur Phenol über eine auf 100°C beheizte Kolonne abdestilliert. Anschliessend wird die Umesterung 5 Stunden unter einem allmählich auf 0,3 mbar absinkendem Druck und einer auf 310°C ansteigenden Innentemperatur fortgesetzt, wobei die Viskosität der Schmelze ansteigt. Man belüftet den Autoklav mit Stickstoff, lässt das Polymer bei 300°C und bei stillstehendem Rührer 1 Stunde absitzen und isoliert das Produkt durch Abspinnen unter Druck und Granulieren des Schmelzstranges.

Bevorzugte erfindungsgemässe Zusammensetzungen sind solche, in denen das Polyphenylenetherharz der Formel

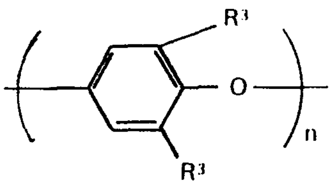

entspricht, worin das Ethersauerstoffatom einer Einheit mit dem Benzolkern der nächsten benachbarten Einheit verbunden ist, n eine positive ganze Zahl von wenigstens 50, und $R^3$ unabhängig voneinander Wasserstoff, Halogen wie Chlor, Brom oder ein einwertiger Substituent frei von einem tertiären α-Kohlenstoffatom ist, ausgewählt aus Kohlenwasserstoffresten, Kohlenwasserstoffoxyresten, Halogenkohlenwasserstoffresten und Halogenkohlenwasserstoffoxyresten, wobei in beiden letzteren Fällen wenigstens 2 Kohlenstoffatome jeweils zwischen dem Halogenatom und den Phenylkern sind.

Besonders bevorzugte Harze sind solche in denen $R^3$ Alkyl mit 1–6 Kohlenstoffatomen darstellt, ganz besonders bevorzugt ist Methyl.

Erfindungsgemäss geeignete Polyphenylenetherharze sind beispielsweise

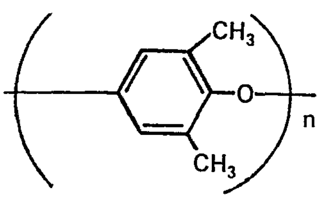

Das Polyphenylenetherharz gemäss Bestandteil (1) der erfindungsgemässen Zusammensetzung kann von dem Fachmann in bekannter Weise, beispielsweise nach den Lehren des obengenannten US-Patentes 3 383 435 und den genannten Literaturstellen hergestellt werden. Derartige Materialien sind auch im Handel erhältlich.

Die grundmolaren Viskositäten (intrinsic -Viskosität) erfindungsgemäss verwendbaren Polyphenylenetherharze liegen zwischen 0,15 und 0,98 Deziliter pro Gramm (dl/g), gemessen in Chloroform bei 30°C.

Bevorzugte erfindungsgemässe Zusammensetzungen sind ausserdem solche, in denen das Polystyrolharz wenigstens 25 Gew.-%, insbesondere 20 bis 80 Gew.-% Einheiten enthält, die von einer Verbindung der Formel

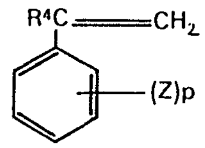

abgeleitet sind, worin $R^4$ Wasserstoff, Alkyl mit 1 bis 6 Kohlenstoffatomen oder Halogen (wie Chlor, Brom) oder niederes Alkyl mit 1-4 C-Atomen ist und p = 0 oder eine ganze Zahl ist, die maximal gleich der Zahl der ersetzbaren Wasserstoffatome an dem Benzolkern dieser Formel ist. Bevorzugt werden solche Polystyrolharze, in denen p = 0 ist und $R^4$ Wasserstoff darstellt. Typische Styrolharze umfassen beispielsweise Homopolymere, wie Polystyrol und Polychlorstyrol, modifizierte Polystyrole, wie kautschuk-modifizierte Polystyrole (hochschlagfeste Polystyrole) und die Styrol haltigen Copolymeren, wie die Styrol-Acrylnitril-Copolymeren (SAN), Styrol-Butadien-Copolymeren, Styrol/Ether-Propylen-Butadien-Terpolymeren (EPDM), Styrol-Maleinsäureanhydrid-Copolymeren (SMA), Styrol-Acrylnitril-α-Alkyl-Styrol-Copolymeren, Styrol-Acrylnitril-Butadien-Terpolymeren (ABS), Poly-α-Methylstyrol und Copolymere von Ethylvinylbenzol und Divinylbenzol.

Derartige, erfindungsgemäss geeignete Polystyrolharze sind in bekannter Weise, beispielsweise gemäss DE-A 2246713, S. 19 herstellbar.

Sie haben Gewichtsmittel-Molekulargewichte zwischen 100 000 und $10^6$.

Die Art des zur Herstellung der erfindungsgemässen flammwidrigen Zusammensetzung verwendeten Polyphosphonats gemäss Bestandteil (2) ist nicht kritisch. Vorzugsweise werden jedoch Polymethylphosphonate und Polyphenylphosphonate auf Basis Bisphenol A, Hydrochinon, Resorcin, 4,4'-Dihydroxidiphenyl und 4,4'-Dihydroxidiphenylsulfon verwendet.

Die Herstellung der erfindungsgemässen flammwidrigen Zusammensetzungen kann beispielsweise durch Vormischen der einzelnen Polymerkomponenten, Aufschmelzen in einem geeigneten Extruder und Extrudieren der homogenisierten Schmelze erfolgen. Nach einem anderen Verfahren wird eine Vormischung erstellt, die

eine Polyphosphonat-Polyphenylenoxidharz-Polystyrolharz-Legierung mit hohem Polyphosphonatgehalt darstellt. Diese Vormischung kann dem Polyphenylenoxidharz-Polystyrolharzgemisch zugesetzt werden zur Herstellung einer erfindungsgemässen Zusammensetzung mit einer gewünschten Konzentration an Polyphosphonat. Die Extrusionstemperatur kann zwischen 230°C und 320°C variieren, wobei die Temperatur jeweils von der speziellen Zusammensetzung etwas beeinflusst wird.

Die aus dem Extruder austretenden Stränge können abgekühlt, granuliert und anschliessend zu Formkörpern verarbeitet werden.

Die Konzentration des flammhemmenden Polyphosphonat-Bestandteils (2) kann variieren, sie ist jedoch zu einem grossen Ausmass von der Konzentration des Polystyrolharzes und dem speziell verwendeten Polystyrolharz abhängig. Niedere Konzentrationen des Polystyrolharzes oder geringere Brennbarkeit der Polystyrolharze erfordern eine geringere Konzentration an Polyphosphonat. Im allgemeinen werden indessen Mengen von 1 bis 20 Gew.-Teilen des Bestandteils (2) bezogen auf 100 Gew.-Teile der Gesamtmischung aus den Bestandteilen (1) und (2) verwendet. Um jedoch die wesentlichen Vorteile sicherzustellen, werden zweckmässig 2 bis 15 Gew.-Teile des Bestandteils (2) pro 100 Gew.-Teile der vereinigten Bestandteile (1) und (2) eingesetzt.

Das Gewichtsverhältnis von Polyphenylenetherharz und Polystyrolharz im Bestandteil (1) liegt zwischen 4:1 und 1:4.

Erfindungsgemäss verwendbare Abmischungen aus Polyphenylenetherharz und Polystyrolharz als Bestandteil (1) sind auch in der US-PS 3 383 435 beschrieben.

Herkömmliche d.h. für Polyphenylenether und Polystyrolharze bekannte Zusatzstoffe, beispielsweise Verstärkungsmittel, Pigmente, Stabilisatoren, Schmiermittel und Weichmacher können ebenfalls in herkömmlichen Mengen zugesetzt werden.

Als weichmachende Verbindungen sind beispielsweise Triarylphosphate, cyclische Phosphonate oder halogenierte Kohlenwasserstoffe in Mengen von 0,5 bis 6 Gew.-%, insbesondere in Mengen von 1 bis 4 Gew.-% bezogen jeweils auf Gesamtgewicht aus den Bestandteilen (1) und (2) der erfindungsgemässen Zusammensetzung geeignet.

Die weichmachenden Additive können teilweise selbst partiell mit einem Beitrag zur Flammwidrikeit der erfindungsgemässen Zusammensetzungen liefern.

Beispielsweise können literaturbekannte Triarylphosphate der allgemeinen Struktur

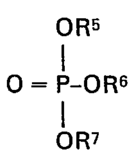

in den angegebenen Mengen verwendet werden, wobei $R^5$, $R^6$ und $R^7$ gleich oder verschieden und Aryl, alkylsubstituiertes Aryl oder Hydroxyaryl sein können (siehe dazu auch DE-A 2 751 496). Geeignete Phosphate sind beispielsweise Triphenylphosphat, Diphenylkresylphosphat, Trikresylphosphat.

Ebenfalls geeignet als weichmachende Additive sind literaturbekannte cyclische Phosphonate der allgemeinen Struktur

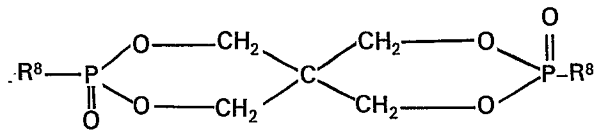

in den angegebenen Mengen, worin $R^8$ einen $C_1$ bis $C_{18}$ Alkylrest, Aryl- oder Alkylalylrest darstellt (siehe dazu auch DE-A 2916972). Geeignete cyclische Phosphonate sind beispielsweise

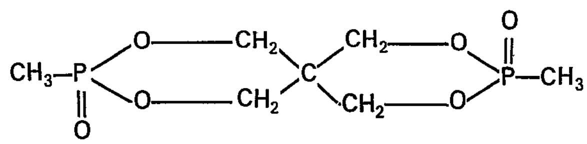

Weiterhin sind als weichmachende Additive mit gleichzeitig flammhemmender Wirksamkeit chlorierte Paraffine in den angegebenen Mengen verwendbar (siehe dazu auch DE-A 2 751 496).

Die erfindungsgemässen Zusammensetzungen können ebenfalls weitere flammhemmende Zusatzstoffe wie beispielsweise Calciumcarbonat oder Antimontrioxid enthalten, wodurch die flammhemmende Wirksamkeit der Polyphosphonatlegierungskomponente zusätzlich noch verstärkt werden kann.

Im Vergleich zu üblicherweise mit Triarylphosphaten flammwidrig eingestellten Polyphenylenoxidharz-Polystyrolharz-Legierungen zeigen die erfindungsgemässen mit einer der Triarylphosphatmenge entsprechenden Gewichtsmenge Polyphosphonat abgemischten Polyphenylenoxidharz-Polystyrolharz-Legierungen eine wesentlich höhere Wärmeformbeständigkeit (gemessen durch Ermittlung der Vicat B-Temperatur gemäss DIN 53460) bei gleich guten Werten für die Brandwidrigkeit.

Die Messung der Härte erfolgte durch Messung der Kugeldruckhärte HK gemäss DIN 53 456. Die Prüfung der mechanisch-elastischen Eigenschaften erfolgte durch Spannungs-Verformungsversuche wie durch Messung der Reissfestigkeit $\sigma_R$ und der Reissdehnung $\varepsilon_R$ gemäss DIN 53 455 (1968) sowie durch Messung des Biege-E-Moduls und des Zug-E-Moduls gemäss DIN 53 457.*

Die Prüfung der Brandwidrigkeit erfolgte durch Messung der Nachbrennzeit gemäss dem UL-Test (Subj. 94). Hierbei werden Teststäbe mit den Abmessungen 127×12,7×1,6 mm (1/16″) und 127×12,7×3,2 mm (1/8″) dem Testverfahren gemäss Underwriters Laboratories, Inc. Bulletin 94,

* Die Messung der Schlagzähigkeit $a_n$ sowie der Kerbschlagzähigkeit $a_k$ erfolgte nach Charpy gemäss DIN 53 453 jeweils an 10 Prüfkörpern.

Verbrennungstest zur Klassifizierung von Materialien, unterworfen.

Gemäss diesem Testverfahren wurden die so geprüften Materialien entweder mit UL-94 V-0 UL-94 V-I und UL-94 V-II klassifiziert, und zwar auf der Basis der mit den 10 Proben erhaltenen Ergebnissen. Die Kriterien für jede dieser V-Klassifizierungen gemäss UL-94 sind kurz wie folgt:

UL-94 V-0 Das durchschnittliche Flammen und/oder Glühen nach Entfernung der Zündflamme soll 5 Sekunden nicht überschreiten und keine der Proben soll Teilchen abtropfen, die absorbierende Baumwolle entzünden.

UL-94 V-I Das durchschnittliche Flammen und/oder Glühen nach Entfernung der Zündflamme soll 25 Sekunden nicht überschreiten, und keine der Proben soll Teilchen abtropfen, die absorbierende Baumwolle entzünden.

UL-94 V-II Das durchschnittliche Flammen und/oder Glühen nach Entfernung der Zündflamme soll 25 Sekunden nicht überschreiten und die Proben tropfen flammende Teilchen ab, welche absorbierende Baumwolle entzünden.

Weiterhin wurde ein Teststab, der mehr als 25 Sekunden nach Entfernung der Zündflamme brannte, nicht nach UL-94 klassifiziert, sondern derselbe wurde nach den Standardbedingungen der vorliegenden Erfindung als «brennt» bezeichnet. Die Vorschrift UL-94 erfordert weiterhin, dass alle Teststäbe eines Versuchs die jeweilige V-Bewertung erfüllen müssen, anderenfalls erhalten die 10 Teststäbe die Bewertung des schlechtesten Einzelstabes. Wenn beispielsweise 1 Stab mit UL-94 V-II bewertet wird und die anderen 9 Teststäbe mit UL-94 V-0 bewertet werden, dann erhalten alle 10 Stäbe die Bewertung UL-94 V-II.

Die erfindungsgemässen Zusammensetzungen aus Polyphenylenetherharz, Polystrolharz, Polyphosphonat und gegebenenfalls einem weichmachenden Additiv werden vorgemischt, bei 270°C extrudiert und zu Granulat zerkleinert. Das Granulat wird im Spritzgiessverfahren bei 260°C extrudiert. Die physikalischen Eigenschaften und die Ergebnisse des Brenntests sind für diese Materialien und für die Vergleichsmaterialien in der nachfolgenden Tabelle vergleichend aufgeführt.

Vergleichsbeispiel 1

Vergleichend ausgeprüft wurde eine Polymerlegierung aus 50 Gew.-% Poly-(2,6-dimethyl-1,4-phenylen)-ether (PPO-Harz der Fa. General Electric Co., USA) und 50 Gew.-% eines Polystyrolharzes (FG 834 kautschukmodifiziertes Polystyrol der Fa. Foster Grant Co., USA). Diese Polymerlegierung wird als Legierung A bezeichnet. Die Verarbeitungstemperatur im Extruder beträgt 260°C.

Vergleichsbeispiel 2

90 Gew.-Teile der Legierung A werden mit 10 Gew.-Teilen Phenyldikresyl-phosphat («Disflamoll DPK» der Fa. Bayer AG) homogen vermischt, bei 260°C extrudiert und ausgeprüft. Diese Polymerzusammensetzung wird Legierung B bezeichnet.

Beispiel 1

90 Gew.-Teile der Legierung A werden homogen mit 10 Gew.-Teilen eines Polymethylphosphonats auf Basis 4,4'-Dihydroxidiphenyl vermischt, bei 260°C extrudiert und ausgeprüft. Das Polymethylphosphonat besitzt eine relative Lösungsviskosität von $\eta$ rel = 1,316 (gemessen bei 25°C in Methylenchlorid in 0,5 gew.-%iger Lösung) und ein Zahlenmittelmolekulargewicht $\bar{M}_n$ von 26700. Diese so erhaltene Polymerzusammensetzung wird als Legierung C bezeichnet.

Beispiel 2

90 Gew.-Teile der Legierung A werden homogen mit 10 Gew.-Teilen eines Polymethylphosphonats auf Basis 2,2-Bis-(4-hydroxiphenyl)-propan (= Bisphenol A) vermischt, bei 260°C extrudiert und ausgeprüft. Dieses Polymethylphosphonat besitzt eine relative Lösungsviskosität von $\eta$ rel = 1,280 sowie ein Zahlenmittelmolekulargewicht $\bar{M}_n$ von 22000. Diese so erhaltene Polymerzusammensetzung wird als Legierung D bezeichnet.

Beispiel 3

90 Gew.-Teile der Legierung A werden mit 6,5 Gew.-Teilen eines Polymethylphosphonats auf Basis 4,4'-Dihydroxidiphenyl mit einem $\bar{M}_n$ von 26700 sowie mit 3,5 Gew.-Teilen Phenyl-dikresylphosphat als weichmachendem Additiv homogen vermischt, bei 270°C extrudiert und ausgeprüft.

Beispiel 4

Analog der Zusammensetzung des Beispiels 3 wurde eine Legierung aus 90 Gew.-Teilen der Legierung A, 5 Gew.-Teilen des Polymethylphosphonats auf Basis 4,4'-Dihydroxidiphenyl mit einem $\bar{M}_n$ von 26700 und 5 Gew.-Teilen Phenyl-dikresyl-phosphat hergestellt.

Beispiel 5

90 Gew.-Teile der Legierung A, 7,5 Gew.-Teile eines Polymethylphosphonats auf Basis 4,4'-Dihydroxidiphenyl mit einem $\bar{M}_n$ von 26700 und 2,5 Gew.-Teile Chlorparaffinwachs werden homogen vermischt, bei 260°C extrudiert und ausgeprüft.

Beispiel 6

90 Gew.-Teile der Legierung A, 6,5 Gew.-Teile eines Polymethylphosphonats auf Basis 2,2-Bis-(4-hydroxiphenyl)-propan (= Bisphenol A) mit einem Zahlenmittelmolekulargewicht $\bar{M}_n$ von 22000 und 3,5 Gew.-Teile Phenyl-dikresyl-phosphat werden homogen vermischt, bei 260°C extrudiert und ausgeprüft.

Beispiel 7

90 Gew.-Teile der Legierung A, 7,5 Gew.-Teile eines Polymethylphosphonats auf Basis Bisphenol A mit einem Zahlenmittelmolekulargewicht

$\bar{M}_n$ von 22 000 und 2,5 Gew.-Teile des bicyclischen Phosphonats der folgenden Struktur

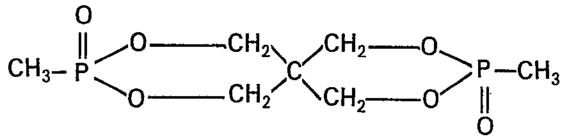

werden homogen vermischt, bei 260°C extrudiert und ausgeprüft.

Vergleichende Tabelle

| | Leg. A Vergl.-Beispiel 1 | Leg. B Vergl.-Beispiel 2 | Leg. C Beispiel 1 | Leg. D Beispiel 2 |
|---|---|---|---|---|
| Schlagzähigkeit $a_n$ (kJ/m²) | 6 × n. g.*/100 | 6 × n. g./87 | 14 | 14 |
| Kerbschlagzähigkeit $a_k$ (kJ/m²) | 11 | 11 | 3,6 | 5 |
| Kugeldruckhärte HK (N/mm²) | 119 | 117 | 122 | 125 |
| Biegefestigkeit (MPa) bei 3,5% Randfaserdehnung | 79 | 69 | 77 | 79 |
| Biege-E-Modul (MPa) | 2800 | 2630 | 2880 | 2890 |
| Reissfestigkeit $\sigma_R$ (MPa) | 52 | 47 | 54 | 54 |
| Reissdehnung $\varepsilon_R$ (%) | 44 | 33 | 3 | 3 |
| Zug-E-Modul (MPa) | 2470 | 2390 | 2520 | 2550 |
| Vicat-B-Temp. (°C) | 136 | 100 | 135 | 133 |
| Iso-R-75 (Meth. A) (°C) | 122 | 88 | 121 | 118 |
| UL-94 (1/16″) | nicht bestanden | V-1 | V-1 | V-1 |
| UL-94 (1/8″) | nicht bestanden | V-0 | V-0 | V-0 |

* n. g. = nicht gebrochen

Vergleichende Tabelle

| | Beispiel 3 | Beispiel 4 | Beispiel 5 | Beispiel 6 | Beispiel 7 |
|---|---|---|---|---|---|
| Schlagzähigkeit $a_n$ (kJ/m²) | 7× n. g.*/90 | 6 × n. g./100 | 6 × n. g./100 | 83 | 6 × n. g./90 |
| Kerbschlagzähigkeit $a_k$ (kJ/m²) | 10 | 10 | 10 | 8 | 10 |
| Kugeldruckhärte HK (N/mm²) | 122 | 126 | 121 | 129 | 122 |
| Biegefestigkeit (MPa) bei 3,5% Randfaserdehnung | 79 | 81 | 79 | 80 | 80 |
| Biege-E-Modul (MPa) | 3030 | 2940 | 3020 | 2920 | 3010 |
| Reissfestigkeit 6$_R$ (MPa) | 52 | 49 | 52 | 50 | 53 |
| Reissdehnung $\varepsilon_R$ (%) | 31 | 37 | 22 | 25 | 24 |
| Zug-E-Modul (MPa) | 2590 | 2570 | 2590 | 2580 | 2600 |
| Vicat-B-Temp. (°C) | 122 | 116 | 127 | 122 | 127 |
| Iso-R-75 (Meth. A) (°C) | 107 | 104 | 109 | 106 | 109 |
| UL-94 (1/16″) | V-1 | V-1 | V-1 | V-1 | V-1 |
| UL-94 (1/8″) | V-0 | V-0 | V-0 | V-0 | V-0 |

* n. g. = nicht gebrochen

**Patentansprüche für die Vertragsstaaten: DE, FR, GB**

1. Flammhemmende Zusammensetzung, dadurch gekennzeichnet, dass sie enthält:

(1) eine normalerweise brennbare Zusammensetzung aus einem Polyphenylenetherharz und einem Polystyrolharz,

(2) einen gegebenenfalls verzweigten aromatischen thermoplastischen Polymethylphosphonsäureester mit einem Zahlenmittelmolekulargewicht von $\bar{M}_n$ = 4000 bis 80 000

wobei Bestandteile (2) in Mengen von 1 bis 20 Gew.-Teilen, bezogen auf 100 Gew.-Teile der Gesamtmischung aus (1) und (2) eingesetzt wird sowie gegebenenfalls (3) geringe Mengen einer weichmachenden Verbindung.

2. Zusammensetzung gemäss Anspruch 1, dadurch gekennzeichnet, dass das Polyphenylenetherharz der Formel

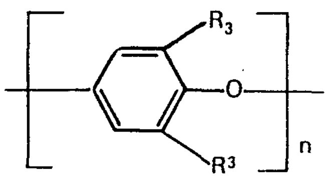

entspricht, worin das Ethersauerstoffatom einer Einheit mit dem Benzolkern der nächsten benachbarten Einheit verbunden ist, n eine positive ganze Zahl von wenigstens 50 darstellt und die $R^3$-Reste unabhängig voneinander ausgewählt sind aus Wasserstoff, Halogen oder einem einwertigen Substituenten ohne tertiäres $\alpha$-Kohlenstoffatom, ausgewählt aus Kohlenwasserstoffresten, Kohlenwasserstoffoxyresten, Halogenkohlenwasserstoffresten und Halogenkohlenwasserstoffoxyresten, wobei in beiden letzteren Fällen wenigstens 2 Kohlenstoffatome zwischen dem Halogenatom und dem Phenylkern sind.

3. Zusammensetzung nach einem der vorhergehenden Ansprüche, dadurch gekennzeichnet, dass das Polystyrolharz zu 20 bis 80 Gew.-Teilen bezogen auf 100 Gew.-Teile Bestandteil (1), enthalten ist.

4. Zusammensetzung nach einem der vorhergehenden Ansprüche, dadurch gekennzeichnet, dass das Polystyrolharz wenigstens 25 Gew.-% von Einheiten aufweist, die von der Formel

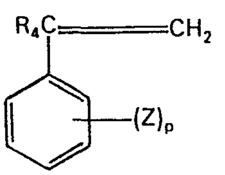

abgeleitet sind, worin $R^4$ Wasserstoff, Alkyl mit 1 bis 6 Kohlenstoffatomen oder Halogen darstellt; Z Vinyl, Halogen oder $C_1$–$C_4$-Alkyl ist und p = 0 oder eine ganze Zahl ist, die maximal gleich der Zahl der ersetzbaren Wasserstoffatome an dem Benzolkern dieser Formel ist.

5. Zusammensetzung nach Anspruch 4, dadurch gekennzeichnet, dass das Polystyrolharz Styrolhomopolymerharz ist.

6. Zusammensetzung nach einem der vorhergehenden Ansprüche, dadurch gekennzeichnet, dass die Menge des Bestandteils (2) 2 bis 15 Gew.-Teile pro 100 Gew.-Teile der vereinigten Bestandteile (1) und (2) ist.

7. Zusammensetzung gemäss Ansprüche 1 bis 6, dadurch gekennzeichnet, dass zusätzlich 0,5 bis 6 Gew.-%, bezogen auf Gesamtgewicht aus den Bestandteilen (1) und (2), einer weichmachenden Verbindung enthalten sind.

**Patentansprüche für die Vertragsstaaten IT, NL**

1. Flammhemmende Zusammensetzung, dadurch gekennzeichnet, dass sie enthält:

(1) eine normalerweise brennbare Zusammensetzung aus einem Polyphenylenetherharz und einem Polystyrolharz,

(2) einen gegebenenfalls verzweigten aromatischen thermoplastischen Polyphosphonsäureester mit einem Zahlenmittelmolekulargewicht von $\bar{M}_n$ = 4000 bis 80 000

wobei Bestandteile (2) in Mengen von 1 bis 20 Gew.-Teilen, bezogen auf 100 Gew.-Teile der Gesamtmischung aus (1) und (2) eingesetzt wird sowie gegebenenfalls (3) geringe Mengen einer weichmachenden Verbindung.

2. Zusammensetzung gemäss Anspruch 1, dadurch gekennzeichnet, dass der aromatische Polyphosphonsäureester (2) ein aromatischer Polymethylphosphonsäureester ist.

3. Zusammensetzung gemäss Anspruch 1, dadurch gekennzeichnet, dass das Polyphenylenetherharz der Formel

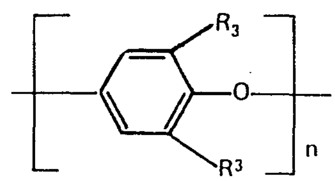

entspricht, worin das Ethersauerstoffatom einer Einheit mit dem Benzolkern der nächsten benachbarten Einheit verbunden ist, n eine positive ganze Zahl von wenigstens 50 darstellt und die $R^3$-Reste unabhängig voneinander ausgewählt sind aus Wasserstoff, Halogen oder einem einwertigen Substituenten ohne tertiäres $\alpha$-Kohlenstoffatom, ausgewählt aus Kohlenwasserstoffresten, Kohlenwasserstoffoxyresten, Halogenkohlenwasserstoffresten und Halogenkohlenwasserstoffoxyresten, wobei in beiden letzteren Fällen wenigstens 2 Kohlenstoffatome zwischen dem Halogenatom und dem Phenylkern sind.

4. Zusammensetzung nach einem der vorhergehenden Ansprüche, dadurch gekennzeichnet, dass das Polystyrolharz zu 20 bis 80 Gew.-Teilen bezogen auf 100 Gew.-Teile Bestandteil (1), enthalten ist.

5. Zusammensetzung nach einem der vorhergehenden Ansprüche, dadurch gekennzeichnet, dass das Polystyrolharz wenigstens 25 Gew.-% von Einheiten aufweist, die von der Formel

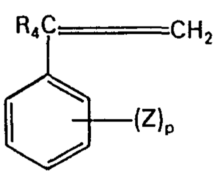

abgeleitet sind, worin $R^4$ Wasserstoff, Alkyl mit 1 bis 6 Kohlenstoffatomen oder Halogen darstellt; Z Vinyl, Halogen oder $C_1$–$C_4$-Alkyl ist und p = 0 oder eine ganze Zahl ist, die maximal gleich der Zahl der ersetzbaren Wasserstoffatome an dem Benzolkern dieser Formel ist.

6. Zusammensetzung nach Anspruch 5, dadurch gekennzeichnet, dass das Polystyrolharz Styrolhomopolymerharz ist.

7. Zusammensetzung nach einem der vorhergehenden Ansprüche, dadurch gekennzeichnet, dass die Menge des Bestandteils (2) 2 bis 15

Gew.-Teile pro 100 Gew.-Teile der vereinigten Bestandteile (1) und (2) ist.

8. Zusammensetzung gemäss Ansprüche 1 bis 7, dadurch gekennzeichnet, dass zusätzlich 0,5 bis 6 Gew.-%, bezogen auf Gesamtgewicht aus den Bestandteilen (1) und (2), einer weichmachenden Verbindung enthalten sind.

**Claims for the Contracting states: OE, FR, GB**

1. Flame-retardant composition, characterised in that it contains (1) a usually inflammable composition of a polyphenylene ether resin and a polystyrene resin, (2) an optionally branched aromatic thermoplastic polymethylphosphonate with a number-average molecular weight of $\bar{M}_n$ of 4,000 to 80,000, the constituent (2) being employed in amounts of 1 to 20 parts by weight per 100 parts by weight of the total mixture of (1) and (2), and, if appropriate, (3) small amounts of a plasticising compound.

2. Composition according to Claim 1, characterised in that the polyphenylene ether resin corresponds to the formula

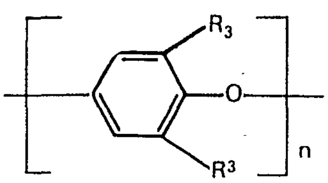

wherein the ether-oxygen atom of a unit is bonded to the benzene nucleus of the next adjacent unit, n represents a positive integer of at least 50 and the $R^3$ radicals, independently of one another, are chosen from the group comprising hydrogen, halogen and a monovalent substituent which does not contain a tertiary α-carbon atom, and are chosen from the group comprising hydrocarbon radicals, hydrocarbon-oxy radicals, halogenated hydrocarbon radicals and halogenated hydrocarbon-oxy radicals, there being at least 2 carbon atoms between the halogen atom and the phenyl nucleus in the two latter cases.

3. Composition according to one of the preceding claims, characterised in that it contains the polystyrene resin to the extent of 20 to 80 parts by weight per 100 parts by weight of constituent (1).

4. Composition according to one of the preceding claims, characterised in that the polystyrene resin contains at least 25% by weight of units which are derived from the formula

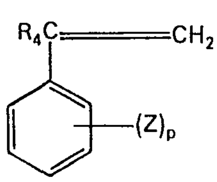

wherein

$R^4$ represents hydrogen, alkyl with 1 to 6 carbon atoms or halogen;

Z is vinyl, halogen or $C_1$-$C_4$-alkyl and p is 0 or an integer which is at most equal to the number of replaceable hydrogen atoms on the benzene nucleus of this formula.

5. Composition according to Claim 4, characterised in that the polystyrene resin is a styrene homopolymer resin.

6. Composition according to one of the preceding claims, characterised in that the amount of constituent (2) is 2 to 15 parts by weight per 100 parts by weight of the combined constituents (1) and (2).

7. Composition according to Claims 1 to 6, characterised in that it additionally contains 0.5 to 6% by weight, relative to the total weight of constituents (1) and (2), of a plasticising compound.

**Revendications pour les Etats OE, FR, GB contractants:**

1. Composition ignifuge, caractérisée en ce qu'elle contient:

(1) une composition, normalement inflammable, consistant en une résine d'éther de polyphénylène et une résine de polystyrène,

(2) un ester polyméthylphosphonique aromatique thermoplastique éventuellement ramifié ayant un poids moléculaire moyen, moyenne en nombre, $\bar{M}_n$, de 4000 à 80 000,

le constituant (2) étant utilisé en quantités de 1 à 20 parties en poids, pour 100 parties en poids du mélange total de (1) et (2), et le cas échéant

(3) des petites quantités d'un composé plastifiant.

2. Composition selon la revendication 1, caractérisée en ce que la résine d'éther de polyphénylène répond à la formule

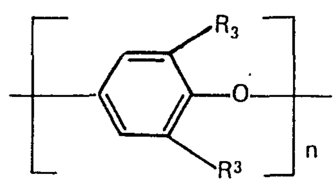

dans laquelle l'atome d'oxygène d'éther d'un motif est relié au noyau benzénique du motif voisin immédiat, n'est un nombre entier positif égal au moins à 50 et les substituants $R^3$ sont choisis, indépendamment l'un de l'autre, parmi l'hydrogène, les halogènes ou un substituant monovalent sans atome de carbone tertiaire en position α, lui-même choisi parmi les restes hydrocarbonés, les restes oxyhydrocarbonés, les restes halogénohydrocarbonés et les restes oxyhalogénohydrocarbonés, avec, dans les deux derniers cas, au moins 2 atomes de carbone entre l'atome d'halogène et le noyau phényle.

3. Composition selon l'une des revendications qui précèdent, caractérisée en ce que la résine de polystyrène est contenue en quantités de 20 à 80 parties en poids, pour 100 parties en poids du constituant (1).

4. Composition selon l'une des revendications qui précèdent, caractérisée en ce que la résine de polystyrène contient au moins 25% en poids de motifs dérivant de la formule

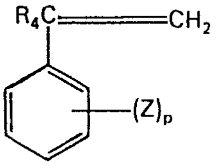

dans laquelle $R^4$ représente l'hydrogène, un groupe alkyle en $C_1$–$C_4$ ou un halogène Z représente un groupe vinyle, un halogène ou un groupe alkyle en $C_1$–$C_6$ et p est égal à 0 ou à un nombre entier qui est égal au maximum au nombre des atomes d'hydrogène remplaçables présents sur le noyau benzénique de cette formule.

5. Composition selon la revendication 4, caractérisée en ce que la résine de polystyrène est une résine homopolymère de styrène.

6. Composition selon l'une des revendications qui précèdent, caractérisée en ce que la quantité du constituant (2) est de 2 à 15 parties en poids pour 100 parties en poids des constituants (1) et (2) combinés.

7. Composition selon les revendications 1 à 6, caractérisée en ce qu'elle contient en outre 0,5 à 6% en poids, par rapport au poids total des constituants (1) et (2), d'un composé plastifiant.

**Claims for the Contracting states: IT, NL**

1. Flame-retardant composition, characterised in that it contains (1) a usually inflammable composition of a polyphenylene ether resin and a polystyrene resin, (2) an optionally branched aromatic thermoplastic polyphosphonate with a number-average molecular weight of $\bar{M}_n$ of 4,000 to 80,000, the constituent (2) being employed in amounts of 1 to 20 parts by weight per 100 parts by weight of the total mixture of (1) and (2), and, if appropriate, (3) small amounts of a plasticising compound.

2. Composition according to Claim 1, characterised in that the aromatic polyphosphonate (2) is an aromatic polymethylphosphonate.

3. Composition according to Claim 1, characterised in that the polyphenylene ether resin corresponds to the formula

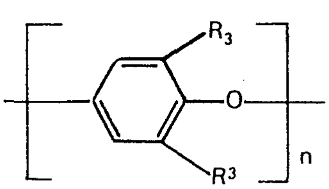

wherein the ether-oxygen atom of a unit is bonded to the benzene nucleus of the next adjacent unit, n represents a positive integer of at least 50 and the $R^3$ radicals, independently of one another, are chosen from the group comprising hydrogen, halogen and a monovalent substituent which does not contain a tertiary α-carbon atom, and are chosen from the group comprising hydrocarbon radicals, hydrocarbon-oxy radicals, halogenated hydrocarbon radicals and halogenated hydrocarbon-oxy radicals, there being at least 2 carbon atoms between the halogen atom and the phenyl nucleus in the two latter cases.

4. Composition according to one of the preceding claims, characterised in that it contains the polystyrene resin to the extent of 20 to 80 parts by weight per 100 parts by weight of constituent (1).

5. Composition according to one of the preceding claims, characterised in that the polystyrene resin contains at least 25% by weight of units which are derived from the formula

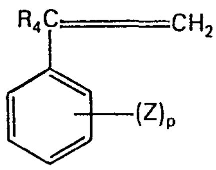

wherein

$R^4$ represents hydrogen, alkyl with 1 to 6 carbon atoms or halogen;

Z is vinyl, halogen or $C_1$–$C_4$-alkyl and

p is 0 or an integer which is at most equal to the number of replaceable hydrogen atoms on the benzene nucleus of this formula.

6. Composition according to Claim 5, characterised in that the polystyrene resin is a styrene homopolymer resin.

7. Composition according to one of the preceding claims, characterised in that the amount of constituent (2) is 2 to 15 parts by weight per 100 parts by weight of the combined constituents (1) and (2).

8. Composition according to Claims 1 to 7, characterised in that it additionally contains 0.5 to 6% by weight, relative to the total weight of constituents (1) and (2), of a plasticising compound.

**Revendications pour l'Etat contractant: IT, NL**

1. Composition ignifuge, caractérisée en ce qu'elle contient:

(1) une composition, normalement inflammable, consistant en une résine d'éther de polyphénylène et une résine de polystyrène,

(2) un ester polyphosphonique aromatique thermoplastique éventuellement ramifié avant un poids moléculaire, moyenne en nombre, $\bar{M}_n$ de 4000 à 80 000,

le constituant (2) étant utilisé en quantités de 1 à 20 parties en poids, pour 100 parties en poids du mélange total de (1) et (2), et le cas échéant

(3) des petites quantités d'un composé plastifiant.

2. Composition selon la revendication 1, caractérisée en ce que l'ester polyphosphonique aromatique (2) est un ester polyméthylphosphonique aromatique.

3. Composition selon la revendication 1, caractérisée en ce que la résine d'éther de polyphénlyène répond à la formule

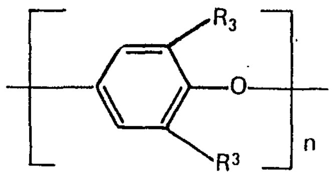

dans laquelle l'atome d'oxygène d'éther d'un motif est relié au noyau benzénique du motif voisin immédiat, n'est un nombre entier positif égal au moins à 50 et les substituants $R^3$ sont choisis, indépendamment l'un de l'autre, parmi l'hydrogène, les halogènes ou un substituant monovalent sans atome de carbone tertiaire en position α, lui-même choisi parmi les restes hydrocarbonés, les restes oxyhydrocarbonés, les restes halogénohydrocarbonés et les restes oxyhalogénohydrocarbonés, avec, dans les deux derniers cas, au moins 2 atomes de carbone entre l'atome d'halogène et le noyau phényle.

4. Composition selon l'une des revendications qui précèdent, caractérisée en ce que la résine de polystyrène est contenue en quantités de 20 à 80 parties en poids pour 100 parties en poids du constituant (1).

5. Composition selon l'une des revendications qui précèdent, caractérisée en ce que la résine de polystyrène contient au moins 25% en poids de motifs dérivant de la formule

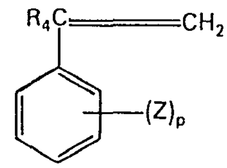

dans laquelle $R_4$ représente l'hydrogène, un groupe alkyle en $C_1$-$C_6$ ou un halogène, Z représente un groupe vinyle, un halogène ou un groupe alkyle en $C_1$-$C_4$ et p est égal à 0 ou représente un nombre entier égal au maximum au nombre des atomes d'hydrogène remplaçables du noyau benzénique de cette formule.

6. Composition selon la revendication 5, caractérisée en ce que la résine de polystyrène est une résine homopolymère de styrène.

7. Composition selon l'une des revendications qui précèdent, caractérisée en ce que la quantité du constituant (2) est de 2 à 15 parties en poids pour 100 parties en poids des constituants (1) et (2) combinés.

8. Composition selon les revendications 1 à 7, caractérisée en ce qu'elle contient en outre de 0,5 à 6% en poids, par rapport au poids total des constituants (1) et (2), d'un composé plastifiant.